# FASCICULE DE BREVET EUROPEEN

(11) **EP 1 399 064 B1**
(45) Date de publication et mention de la délivrance du brevet: **30.09.2015**
(21) Numéro de dépôt: 02751252.4
(22) Date de dépôt: 17.06.2002
(51) Int. Cl.: A61B 5/117, G06K 9/00

(54) **PROCEDE DE RECONNAISSANCE D'EMPREINTES DIGITALES PAR DEFORMATION ET SYSTEME INFORMATIQUE POUR METTRE EN OEUVRE LEDIT PROCEDE**
VERFAHREN ZUR ERKENNUNG VON FINGERABDRÜCKE DURCH VERFORMUNG UND RECHNERSYSTEM ZUM AUFÜHREN DES VERFAHRENS
METHOD FOR RECOGNISING DIGITAL FINGERPRINTS BY DISTORTION AND THE COMPUTER SYSTEM FOR USING SAID METHOD

(30) Priorité: 15.06.2001 FR 0107860
(43) Date de publication de la demande: 24.03.2004
(73) Titulaire: MORPHO, 92130 Issy-Les-Moulineaux (FR)
(72) Inventeur: BORNES, Luc, F-95000 Cergy (FR)
(74) Mandataire: Cabinet Plasseraud
(86) Numéro de dépôt international: PCT/FR2002/002080
(87) Numéro de publication internationale: WO 2002/102248

(56) Documents cités:
- US-A- 3 982 836
- US-A- 5 703 958
- "Adobe Photoshop 5.0 User guide" 1998 , SCOTLAND XP002193088 page 185, colonne de gauche, alinéa 3 -page 186, colonne de droite, ligne 3

## Description

Le domaine de l'invention est celui de la reconnaissance d'empreintes digitales.

La reconnaissance d'empreintes digitales est couramment utilisée pour identifier une personne en fonction de ses empreintes digitales.

Une base de données d'empreintes digitales répertorie généralement une multitude d'images d'empreintes digitales avec pour chacune un ensemble de points caractéristiques et une correspondance avec une identité de personne à qui est attribuée l'empreinte digitale.

Une image d'empreinte digitale est constituée d'un certain nombre de lignes plus ou moins sombres séparées par des lignes plus ou moins claires avec des points d'arrêt et des points de modification de courbure qui constituent les points caractéristiques de l'empreinte digitale.

Pour établir une correspondance univoque entre une image qui résulte d'un relevé d'empreinte d'identité inconnue et une image d'empreinte de la base de données, on procède globalement de la façon suivante. L'image d'empreinte inconnue est présentée à un spécialiste qui détermine des points caractéristiques de l'empreinte inconnue. L'image d'empreinte inconnue avec ses points caractéristiques déterminés, est soumise à un système informatique qui la compare aux images de la base de données. Le système informatique retient parmi les images de la base de données, un échantillon de celles qu'un algorithme juge de façon connue, les plus proches de l'image soumise. Les images retenues par le système informatique sont ensuite présentées au spécialiste qui les compare avec l'image d'empreinte inconnue de façon à retrouver une correspondance de l'image d'empreinte inconnue avec une image d'empreinte de la base de données.

Un problème se pose lorsque l'empreinte d'identité inconnue résulte d'un relevé sur une surface quelconque, en particulier sur une surface non plane. C'est par exemple le cas lors d'une enquête policière pendant laquelle des empreintes digitales sont relevées sur tout type d'objet. Les résultats ne sont pas toujours aussi précis que pour des empreintes digitales qui résultent de la pression régulière d'un doigt sur une surface plane spécifiquement prévue à cette effet. En particulier, certaines lignes peuvent être déformées, à cause par exemple d'une distorsion locale de la peau due à son élasticité ou d'une déformation de l'objet support lors du dépôt de l'empreinte.

Pour déterminer les points caractéristiques avant soumission au système informatique, le spécialiste est confronté à un effort d'imagination continuellement soutenu pendant l'observation de l'image pour interpréter si par exemple, une rupture de courbure de ligne donne lieu à une détermination de point caractéristique ou si elle semble plutôt résulter d'un défaut de relevé par comparaison avec l'ensemble de l'image.

Lorsque plusieurs images d'empreintes digitales, retenues par le système informatique comme ayant des points caractéristiques de l'empreinte digitale d'identité inconnue, sont présentées au spécialiste pour qu'il choisisse celle qu'il juge la plus proche de l'image étudiée, le spécialiste est à nouveau confronté à un effort d'imagination pour comparer chaque image présentée à l'image soumise. A cause d'absence de similitude qui résulte de défauts de relevés, le spécialiste doit se poser la question de savoir pour chaque image présentée si une absence de similitude résulte du fait que l'empreinte digitale est différente ou du fait que le relevé d'empreinte est abîmé. Cet effort intellectuel supplémentaire nuit au rendement et induit une fatigue du spécialiste.

Pour palier aux inconvénients précédemment cités, un premier objet de l'invention est un procédé de reconnaissance d'empreinte digitale conforme à la revendication 1.

Le défaut est par exemple un défaut de relevé d'empreinte, une distorsion locale de l'empreinte due à une pression irrégulière du doigt sur la surface de relevé du fait de l'élasticité de la peau ou de la nature du support.

En mettant en oeuvre ce procédé, un spécialiste peut fixer sur l'image d'empreinte digitale, le résultat de son analyse de chaque défaut de relevé d'empreinte digitale pour supprimer de l'image les défauts qu'il détecte. Le spécialiste peut ensuite analyser les points caractéristiques de l'image d'empreinte digitale sans avoir à maintenir un effort pour tenir compte mentalement des défauts de l'image.

Au moyen d'un système informatique, le spécialiste peut mettre en oeuvre le procédé objet de l'invention.

D'autres détails et avantages de l'invention ressortent d'un exemple de mise en oeuvre, décrit en référence aux dessins annexés dans lesquels :
- la figure 1 montre schématiquement un système informatique conforme à l'invention ;
- la figure 2 montre des étapes de procédé conforme à l'invention ;
- la figure 3 montre une image distordue d'empreinte digitale ;
- la figure 4 montre une image corrigée d'empreinte digitale obtenue après déformation de l'image de la figure 3.

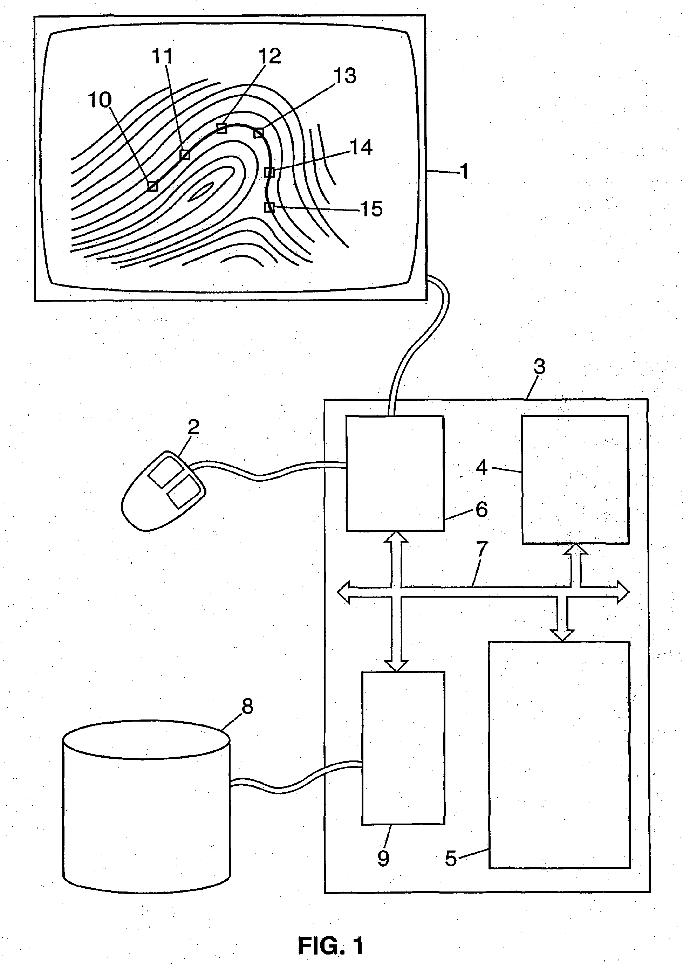

En référence à la figure 1, un système informatique comprend une interface homme-machine avec un écran 1 et une souris 2. Un ordinateur 3 comprend une unité de traitement 4 telle qu'un microprocesseur, une mémoire 5 et un bus 7 auquel sont raccordées de façon connue l'unité de traitement 4 et la mémoire 5. Un disque 8 comprend un ou plusieurs fichiers contenant au moins une image d'empreinte digitale codée numériquement point par point, par exemple au format *.bmp connu en bureautique.

La mémoire 5 contient un logiciel de déformation d'image exécutable par l'unité de traitement 4. Un coupleur 9, raccordé d'une part au disque 8 et d'autre part au bus 7, permet à l'unité de traitement 4 d'accéder aux fichiers d'images du disque 8 pour en charger au moins un en mémoire, 5. Un coupleur 6, raccordé d'une part à l'écran 1 et à la souris 2 et d'autre part au bus 7, permet à l'unité de traitement 4 d'afficher sur l'écran 1 une image d'empreinte digitale dans un environnement du logiciel de déformation d'images.

Le logiciel de déformation d'images contenu dans la mémoire 5 est agencé pour disposer au moyen de la souris 2, des points d'ancrage 10, 11, 12, 13, 14, 15 sur l'image d'empreinte digitale affichée sur l'écran 1. Le logiciel répertorie en mémoire les coordonnées planes de chaque point d'ancrage disposé au moyen de la souris.

D'autre part, le logiciel de déformation d'image dispose pour chaque couple de coordonnées planes définissant un point d'image, de valeurs d'attributs tels que des niveaux sur une échelle de gris de façon à représenter les lignes sombres et les lignes claires de l'empreinte digitale sur l'écran 1.

Le logiciel de déformation d'images est agencé pour déplacer un point d'ancrage 12 au moyen de la souris 2, en laissant fixes les autres points d'ancrage 10, 11, 13, 14, 15 et pour faire cette opération par permutation de tout point d'ancrage disposé sur l'image d'empreinte digitale.

Le logiciel de déformation d'images est agencé pour recalculer les coordonnées de chaque point d'image suite à un déplacement d'un point d'ancrage, de façon à modéliser une déformation plastique plane de l'image.

La modélisation est par exemple programmée de façon à ce que les coordonnées d'un point qualifié par ses valeurs d'attribut, soient recalculées pour respecter les règles mécaniques de déformation des milieux. C'est-à-dire que chaque point de l'image est déplacé de façon analogue à un point d'une surface plastique soumis à des efforts de compression et d'allongement par rapport aux points d'ancrage restés fixes selon la position initiale que ce point de l'image occupe par rapport au point d'ancrage déplacé et selon le sens et la direction de déplacement du point d'ancrage déplacé. Ainsi, considérant par exemple un déplacement d'un premier point d'ancrage qui rapproche le premier point d'ancrage d'un deuxième point d'ancrage resté fixe en éloignant le premier point d'ancrage d'un troisième point d'ancrage resté fixe, on peut observer une réduction d'espacement entre les lignes situées entre le premier point d'ancrage et le deuxième point d'ancrage et une augmentation d'espacement entre les lignes situées entre le premier point d'ancrage et le troisième point d'ancrage.

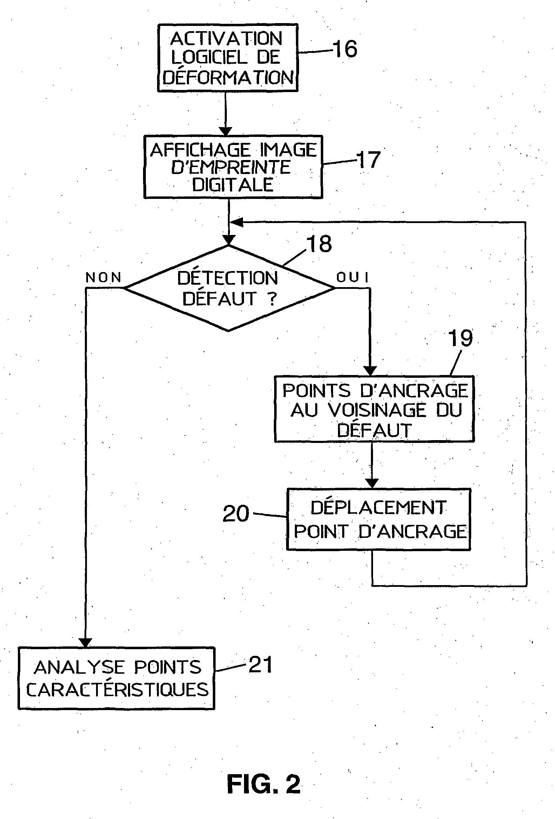

En référence à la figure 2, un procédé de reconnaissance d'empreinte digitale conforme à l'invention comprend une étape 16 dans laquelle le logiciel de déformation d'images est activé de façon à afficher sur l'écran 1, un environnement d'utilisation du logiciel de déformation d'images.

Dans une étape 17, une image d'empreinte digitale est affichée sur l'écran 1, au sein de l'environnement du logiciel de déformation d'images.

Dans une étape 18, on observe l'image d'empreinte digitale pour détecter d'éventuels défauts de relevé d'empreinte comme peut le faire un spécialiste dont le savoir-faire lui est propre.

Si aucun défaut n'est détecté, les points caractéristiques de l'image d'empreinte digitale sont analysés dans une étape 21 pour continuer un procédé de reconnaissance d'image d'empreinte digitale habituel.

Si un défaut est détecté, on place des points d'ancrages sur et ou au voisinage du défaut dans une étape 19. Pour ce faire, on amène le curseur de la souris à l'écran sur le point de l'image où on souhaite mettre un point d'ancrage et on clique par exemple sur le bouton gauche de la souris. Après avoir mis le dernier point d'ancrage, on clique par exemple sur le bouton droit de la souris.

Dans une étape 20, on déplace un ou plusieurs points d'ancrage de façon à corriger le défaut détecté. Pour ce faire, on amène le curseur de la souris sur le point d'ancrage à déplacer. On appuie par exemple sur le bouton gauche de la souris et sans lâcher la pression, on déplace le curseur jusqu'à la nouvelle position souhaitée du point d'ancrage. On lâche alors le bouton de la souris, ce qui provoque un recalcul des coordonnées des points de l'image par le logiciel de déformation d'image.

Les étapes 18 à 20 sont réitérées jusqu'à ne plus détecter de défaut en étape 18.

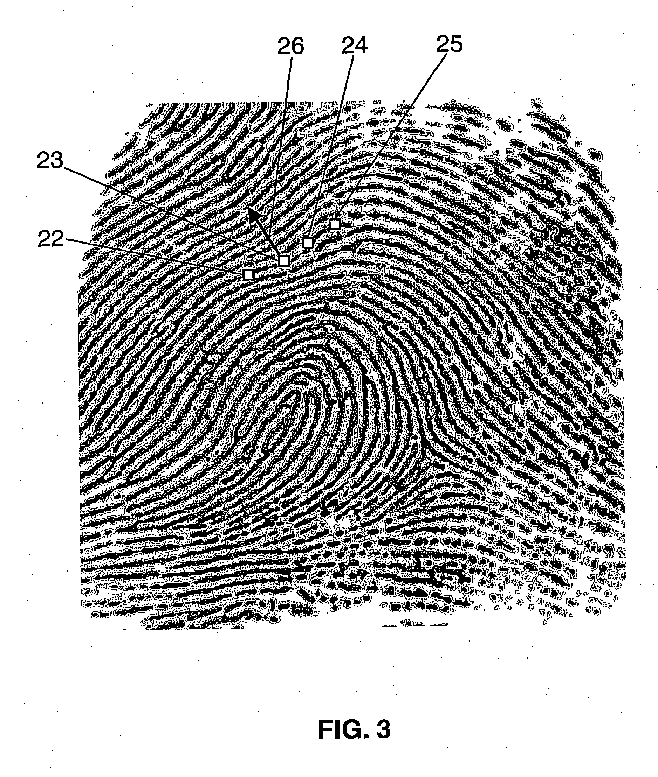

La figure 3 montre une image d'empreinte digitale distordue sur laquelle un spécialiste a placé quatre points d'ancrage 22, 23, 24, 25 car il a détecté un défaut au voisinage des points d'ancrage 23 et 24.

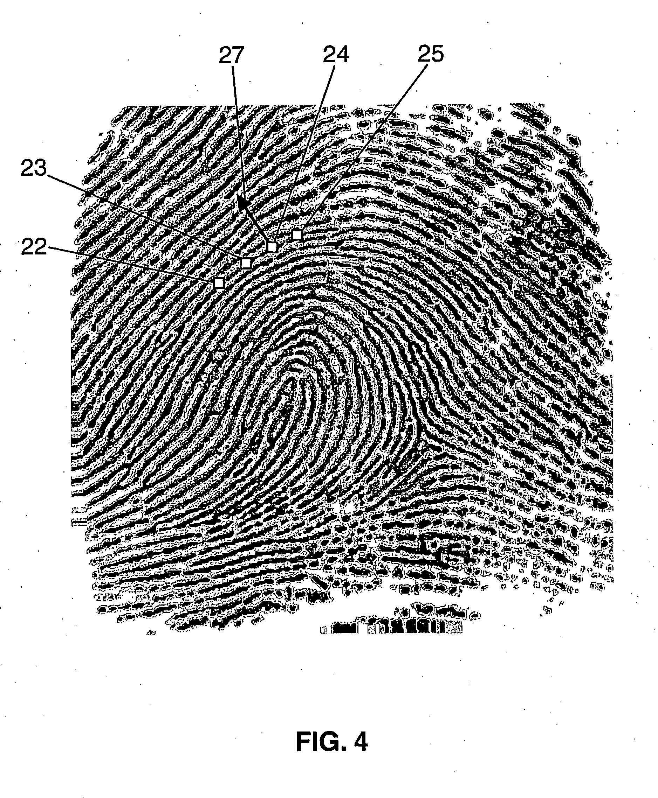

La figure 4 montre l'image d'empreinte digitale après que le spécialiste ait déplacé le point d'ancrage 23 dans le sens et la direction de la flèche 26 présentée sur la figure 3 et le point d'ancrage 24 dans le sens et la direction de la flèche 27, les points d'ancrage 22 et 25 étant restés fixes. Le défaut détecté sur l'image de la figure 3 a disparu sur l'image de la figure 4.

On observe que les lignes de l'image de l'empreinte digitale ont peu varié hors du voisinage du défaut et que les points caractéristiques sont conservés pour en permettre l'analyse. Le spécialiste peut concentrer son attention sur l'image corrigée de la figure 4 sans avoir à se soucier du défaut qui a alors disparu.

D'autre part, les coordonnées des points caractéristiques dans le plan de l'image, déterminés alors avec une plus grande précision, facilitent la comparaison avec des points caractéristiques sur des images d'empreintes digitales connues répertoriées dans des bases de données.

## Revendications

1. Procédé de reconnaissance d'empreinte digitale comportant des étapes consistant à :
- activer un logiciel de déformation d'images sur un ordinateur (3) ;
- afficher une image d'empreinte digitale sur un écran (1) de l'ordinateur (3) dans un environnement de présentation dudit logiciel de déformation d'images ;
- déformer l'image d'empreinte digitale de façon à corriger un défaut local détecté sur ladite image d'empreinte digitale, des points d'ancrage étant disposés dans un voisinage du défaut local tel qu'il est détecté et au moins un point d'ancrage étant déplacé de façon à corriger le défaut local détecté, et dans lequel les points d'ancrage disposés dans un voisinage du défaut local tel qu'il est détecté, autres que ledit au moins un point d'ancrage déplacé, restent fixes, l'image d'empreinte digitale comprenant des lignes d'empreinte digitale en dehors du voisinage du défaut, les lignes d'empreinte digitale définissant des points caractéristiques de l'image, lesdits points caractéristiques étant conservés pour en permettre l'analyse.

2. Procédé de reconnaissance d'empreinte digitale selon la revendication 1, dans lequel la déformation de l'image d'empreinte digitale comprend un recalcul des coordonnées de chaque point de l'image suite au déplacement dudit au moins un point d'ancrage, de façon à modéliser une déformation plastique de l'image.

## Patentansprüche

1. Verfahren zur Erkennung eines Fingerabdrucks, das die Schritte umfasst:
- Einschalten eines Programms zur Bildverzerrung auf einem Computer (3);
- Anzeigen eines Bildes eines Fingerabdrucks auf einem Bildschirm (1) des Computers (3) in einer Präsentationsumgebung des Programms zur Bildverzerrung;
- Verzerren des Bildes des Fingerabdrucks derart, dass ein lokaler Fehler, der auf dem Bild des Fingerabdrucks detektiert wird, korrigiert wird, wobei Verankerungspunkte in der Umgebung des lokalen Fehlers, so wie er detektiert wurde, angeordnet werden, und wobei mindestens ein Verankerungspunkt verschoben wird, um den detektierten lokalen Fehler zu korrigieren, und wobei die Verankerungspunkte, die in der Umgebung des lokalen Fehlers, so wie er detektiert wurde, angeordnet sind und die sich von dem mindestens einen verschobenen Verankerungspunkt unterscheiden, fest bleiben, wobei das Bild des Fingerabdrucks Fingerabdruckslinien außerhalb der Umgebung des Fehlers aufweist, wobei die Fingerabdruckslinien charakteristische Punkte des Bildes definieren, wobei die charakteristischen Punkte zur Analyse bereitgehalten werden.

2. Verfahren zur Erkennung eines Fingerabdrucks nach Anspruch 1, **dadurch gekennzeichnet, dass** die Verzerrung des Bildes des Fingerabdrucks eine Neuberechnung der Koordinaten jedes Punktes des Bildes nach der Verschiebung des mindestens einen Verankerungspunktes umfasst, um eine plastische Verformung des Bildes zu modellieren.

## Claims

1. Method of fingerprint recognition comprising the steps consisting of :
- activating an image distortion software on a computer (3);
- displaying a fingerprint image on a screen (1) of the computer (3) in a presentation environment of said image distortion software program;
- distorting the fingerprint image so as to correct a fault detected on said fingerprint image, anchoring points being disposed in a neighborhood of the fault such as it is detected and at least one anchoring point being moved so as to correct the detected fault, and wherein the anchoring points disposed in a neighborhood of the fault such as it is detected, other than the at least one anchoring point being moved, remain fixed, the fingerprint image comprising fingerprint lines outside the neighborhood of the detected fault, the fingerprint lines defining characteristic points of the image, said characteristic points being preserved so as to allow analysis thereof.

2. Method of fingerprint recognition according to claim 1, wherein the distortion of the fingerprint image comprises a recalculation of the coordinates of each point of the image after moving said at least one anchoring point, so as to subject the image to a plastic distortion.
